# EUROPEAN PATENT SPECIFICATION

(11) **EP 3 144 122 B1**
(45) Date of publication and mention of the grant of the patent: **11.03.2020**
(21) Application number: 16188477.0
(22) Date of filing: 13.09.2016
(51) Int. Cl.: B29C 45/73

(54) **INJECTION MOULD COMPRISING A HEAT TRANSFER DEVICE FOR INCREASING COOLING RATE**
SPRITZGIESSFORM MIT EINER WÄRMEÜBERTRAGUNGSVORRICHTUNG ZUR ERHÖHUNG DER KÜHLGESCHWINDIGKEIT
MOULE À INJECTION COMPORTANT UN DISPOSITIF DE TRANSFERT THERMIQUE POUR AUGMENTER LA VITESSE DE REFROIDISSEMENT

(30) Priority: 17.09.2015 IN 3555MU2015
(43) Date of publication of application: 22.03.2017
(73) Proprietor: Faurecia Interior Systems India Pvt. Ltd., 411026 Pune (IN)
(72) Inventor: PHADTARE, Kishor, 411033 Pune (IN); BHOSALE, Sachin, 411046 Pune (IN)
(74) Representative: Lavoix

(56) References cited:
- WO-A1-02/22341
- WO-A2-2014/023942
- GB-A- 1 201 170
- US-A- 5 423 670
- US-A1- 2006 263 465
- US-A1- 2007 108 668
- "HILFSMITTEL ZUM INNENKUEHLEN VON WERKZEUGSTIFTEN", KUNSTSTOFFE, CARL HANSER VERLAG, MUNCHEN, DE, vol. 67, no. 7, 1 July 1977 (1977-07-01), page 391, XP001173502, ISSN: 0023-5563

## Description

### Field of the Invention

The present invention relates to an injection moulding mould, more particularly, the present invention relates to a heat transfer device for increasing cooling rate of an injection mould.

### Background of the Invention

Injection moulding is widely used for manufacturing a variety of parts, from the smallest components to entire body panels of cars. Further, injection moulding is a manufacturing process used for producing various components by injecting molten material into a mould under pressure. Injection moulding can be performed with various materials, such as metals, glasses, elastomers, confections, and most commonly thermoplastic and thermosetting polymers and the like. Material for the component is fed to a heated barrel, mixed, and then forced into a mould cavity, where it cools and hardens to the configuration of the cavity producing the component. The moulds are made from metal, usually either steel or aluminum, and precision-machined to form the features of the desired part.

For faster cooling of the molten material in the mould cavity, a plurality of cooling channels is configured around the mould cavity. A coolant is circulated through these cooling channels for faster cooling of the mould. This arrangement has limitation, as it cannot extract more heat from a particular portion, which may result into production of defective component. Specifically, high heat load area needs to be cooled faster in comparison to other areas of the mould. These cooling channels are not able to achieve fast cooling of the high heat load area.

Further, fixed conductive blocks are configured around the mould cavity. These blocks are made of high conducting material. Limitation in using such blocks is that these blocks are fixed and there for cannot provide any freedom to reposition them according to the requirement.

US-2007/108668 discloses an injection mold according to the preamble of claim 1.

Therefore, there is a need to provide an injection mould comprising a heat transfer device for increasing cooling rate of an injection mould, which over comes all the drawback of the prior art systems and methods.

### Objects of the Invention

An object of the present invention is to provide an injection mould comprising a heat transfer device for increasing cooling rate of an injection mould.

Another object of the present invention is to provide an injection mould comprising a heat transfer device for increasing cooling rate of an injection mould, which can be configured in various shapes and can be disposed inside a cooling channel at preferred location.

Yet another object of the present invention is to provide an injection mould comprising a heat transfer device for increasing cooling rate of an injection mould, whereby the heat transfer device is easy to manufacture and use.

One more object of the present invention is to provide a heat transfer device for increasing cooling rate of an injection mould, which can be configured in a shape in consistent with the cooling channel.

### Summary of the Invention

According to the present invention there is provided an injection mould comprising a heat transfer device for increasing cooling rate of an injection mould, in accordance with the subject-matter of independent claim 1. The injection mould has a first half and a second half with cooling channels configured around a mould cavity. Coolant is circulated through the cooling channels for cooling. According to the improvement of the present invention the heat transfer device is disposed inside the cooling channel at predefined portion. Further, the heat transfer device partially covers the portion of the cooling channel for increasing heat transfer rate from the portion of the cooling channel to the coolant circulating therein thereby increases cooling rate of the injection mould.

Further, the heat transfer device has a first surface and the second surface. The first surface has a configuration consistent with the cooling channel. Also, the first surface rests against an inner surface of the portion the channel covering the portion partially. The second surface is facing opposite to the first surface and toward inner portion of the cooling channel. The second surface is an uneven surface for increasing surface contact with the coolant and also creates turbulence in flowing coolant. Therefore, upon passing the coolant through the channels, the heat from the injection mould is transferred to the first surface of the heat transfer device through the inner surface of the channels and then to the coolant through the second surface, as the contact area and the turbulence in flow of the coolant is increased, heat transfer rate is also increases therebetween.

### Brief Description of the Drawings

Figure 1a shows a perspective view of a heat transfer device comprised in the injection mould in accordance with the present invention;
Figure 1b shows side view of the heat transfer device of figure 1;
Figure 1c shows top view of the heat transfer device of figure 1,
Figure 2 shows perspective see through view of the injection mould with the heat transfer device;
Figure 3 shows sectional view of the heat transfer device and a cooling channel of the injection mould.

### Detail Description of the Invention

An embodiment of this invention, illustrating its features, will now be described in detail. The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item.

The disclosed embodiments are merely exemplary of the invention, which may be embodied in various forms.

The present invention provides an injection mould comprising a heat transfer device for increasing cooling rate of the injection mould. The heat transfer device can be configured in various shapes and can be disposed inside a cooling channel at preferred location. Further, the heat transfer device is easy to manufacture and use. Furthermore, the cooling rate of the injection mould increase as the contacted area with the coolant increase and also the heat transfer device creates turbulence in the flow of the cooling. Moreover, the heat transfer device shows a first surface with a semicircular cross section in consistent with the cooling channel.

The advantages and features of the present invention will become better understood with reference to the following detailed description and claims taken in conjunction with the accompanying drawings, wherein like elements are identified with like symbols.

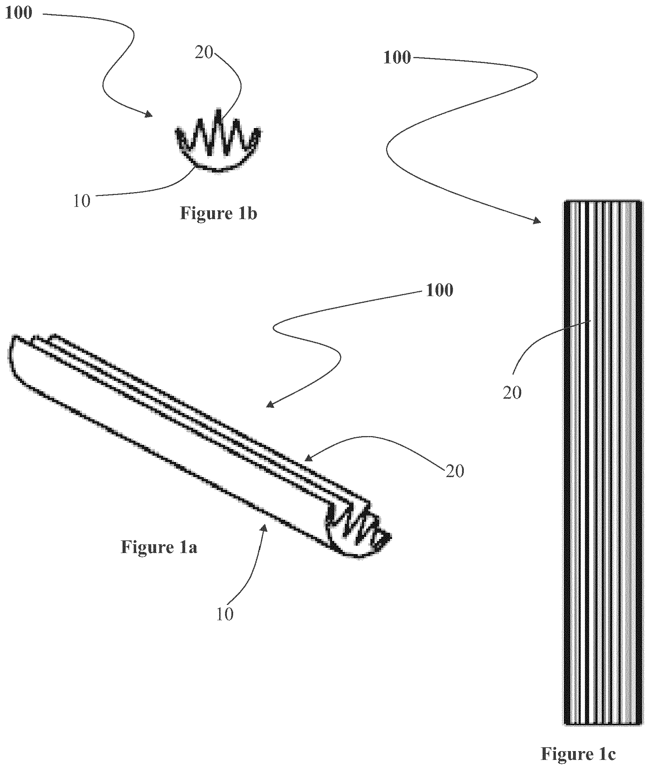

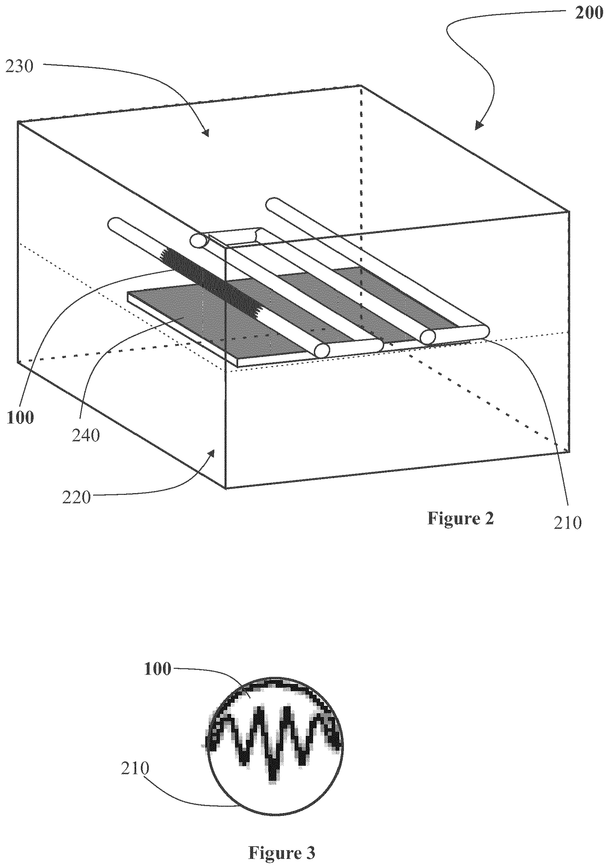

Referring now to figures 1a, 1b and 1c, various views of a heat transfer device 100 for increasing cooling rate of an injection mould 200 (refer figure 2) in accordance with the present invention is shown. In this embodiment, the heat transfer device 100 is configured to be used in the cooling channel 210 with circular cross section as shown in figure 2. Figure 2 shows an exemplary see-through view of the injection mould 200 with the cooling channels 210.

Further, the injection mould 200 is divided in two half, with a first half 220and a second half 230. The cooling channels 210 are configured around a mould cavity 240 and a coolant is circulated through the cooling channels 210. The coolant circulating through the cooling channels 210 enables to extract heat from the injection mould 200. Generally, the first half 220 and the second half230 of the injection mould 200 are made of metal and the cooling channels210 are drawn therein for circulating coolant therefrom. According to the improvement of the present invention, the heat transfer device 100 is disposed inside the cooling channel 210 at predefined portion thereof. The predefined position here refers to a high heat load area of the injection mould200. The heat from these high heat loads area needs to be transferred rapidly for achieving uniform cooling of the molten material inside the mould cavity, thereby avoiding any deformation in a final product.

The heat transfer device 100 includes a first surface 10 and a second surface 20. The first surface 10 has a configuration consistent with the cooling channel 210. Specifically, cross section of the cooling channel 210 and cross section of the first surface 10 are consistent. The heat transfer device 100 is comparatively smaller than the cooling channel 210, which facilitates in inserting the heat transfer device 100 therein easily. Similar cross section of the cooling channel 210 and the first surface 10of the heat transfer device 100 enable in maintaining surface contact therebetween, thereby enabling effective heat transfer between an inner surface of the cooling channel 210 and the first surface 10 of the heat transfer device 100.

Referring again to figures 1a, 1b and 1c, the second surface 20 of the heat transfer device 100 is the surface facing opposite to the first surface 10and towards inner portion of the cooling channel 210 of the injection mould 200. Ends of the first surface 10 and the second surface 20 are connected. Also, the heat transfer device 100 is a solid component made of heat conducting material selected from copper and copper alloys, aluminum and aluminum alloys, brass and brass alloys, bronze and its alloys, nickel-cobalt alloy, steel and the like. As shown in figures 3, the heat transfer device 100partially covers the cooling channel 210, providing sufficient passage for circulation of the coolant therefrom.

Specifically, the second surface 20 is an uneven surface and comes in contact with the coolant circulated through the cooling channels 210. The uneven surface enables to increase contact area between the heat transfer device 100 and the coolant circulated through the cooling channels 210. As the surface area increase the heat transfer rate also increases. Also, the uneven surface creates turbulence in the flow of coolant, which additionally enhances heat transfer between the second surface 20 and the coolant, thereby increasing coolant rate of the molten material in the mould cavity. In the present embodiment and as shown in figures 1a, 1b, and 1c, the second surface 20 of the heat transfer device 100 is zig-zag. In another embodiment, the second surface 20 may include plurality of fins configured thereof. It may be obvious to a person skilled in the art to provide any other uneven configuration to the second surface 20.

Therefore, the present invention of the injection mould comprising the heat transfer device 100 has advance of increasing cooling rate of the injection mould. The heat transfer device 100 can be configured in various shapes and can be disposed inside a cooling channel at preferred location. Further, the heat transfer device 100 is easy to manufacture and use. Furthermore, the cooling rate of the injection mould increase as the contacted area with the coolant increase and also the heat transfer device 100 creates turbulence in the flow of the cooling. Moreover, the first surface of the heat transfer device 100 is configured in semicircular cross sectional shape in consistent with the cooling channel.

The foregoing descriptions of specific embodiments of the present invention have been presented for purposes of illustration and description. They are not intended to be exhaustive or to limit the present invention to the precise forms disclosed, and obviously many modifications and variations are possible in light of the above teaching. The embodiments were chosen and described in order to best explain the principles of the present invention and its practical application, and to thereby enable others skilled in the art to best utilize the present invention and various embodiments with various modifications as are suited to the particular use contemplated. It is understood that various omissions and substitutions of equivalents are contemplated as circumstances may suggest or render expedient, but such omissions and substitutions are intended to cover the application or implementation without departing from the scope of the claims of the present invention.

## Claims

1. An injection mould (200) comprising a first half (220) and a second half (230), the second half (230) comprising cooling channels (210) configured around a mould cavity (240) with a coolant being circulated through the cooling channels (210), the injection mould (200) further comprising a heat transfer device (100) for increasing cooling rate of the injection mould (200),
wherein the heat transfer device (100) is disposed inside the cooling channel (210) at predefined portion, the heat transfer device (100) partially covers the portion of the cooling channel (210) for increasing heat transfer rate from the portion of the cooling channel (210) to the coolant circulating therein thereby increases cooling rate of the injection mould (200) wherein the heat transfer device (100) further comprises:
a first surface (10) having configuration consistent with the cooling channel (210), the first surface (10) rests against an inner surface of the portion the channel (210) covering the portion partially;
a second surface (20) facing opposite to the first surface (10) and toward inner portion of the cooling channel (210) (210), the second surface (20) is an uneven surface for increasing surface contact with the coolant and also creates turbulence in flowing coolant,
wherein upon passing the coolant through the channels (210), the heat from the injection mould (200) is transferred to the first surface (10) of the heat transfer device (100) through the inner surface of the channels (210) and then to the coolant through the second surface (20), as the contact area and the turbulence in flow of the coolant is increased, heat transfer rate is also increases therebetween,
wherein cross section of the first surface (10) is consistent with the cross section of the channel (210), **characterized in that** cross section of the first surface (10) is semicircular,
wherein the uneven second surface (20) provides flexibility along the width of the heat transfer device (100) facilitating in positioning the heat transfer device (100) in the channel (210).

2. The injection mould (200) as claimed in claim 1, wherein the second surface (20) is zigzag.

3. The injection mould (200) as claimed in claim 1, wherein the second surface (20) has plurality of fins.

4. The injection mould (200) according to any preceding claim, wherein the heat transfer device (100) is made of thermally conductive material.

5. The injection mould (200) according to any preceding claim, wherein the portion at which the heat transfer device (100) is placed is a high heat load area of the injection mould (200).

## Patentansprüche

1. Spritzgießform (200) mit einer ersten Hälfte (220) und einer zweiten Hälfte (230), wobei die zweite Hälfte (230) Kühlkanäle (210) aufweist, die um eine Formkavität (240) herum angeordnet sind, wobei ein Kühlmittel durch die Kühlkanäle (210) hindurch zirkuliert wird, wobei die Spritzgießform (200) ferner aufweist eine Wärmeübertragungsvorrichtung (100) zum Erhöhen der Kühlungsrate der Spritzgießform (200),
wobei die Wärmeübertragungsvorrichtung (100) im Kühlkanal (210) an einem vordefinierten Abschnitt angeordnet ist, wobei die Wärmeübertragungsvorrichtung (100) den Abschnitt des Kühlkanals (210) teilweise überdeckt zum Erhöhen der Wärmetransferrate von dem Abschnitt des Kühlkanals (210) zu dem Kühlmittel, das darin zirkuliert, dadurch die Kühlungsrate der Spritzgießform erhöhend, wobei die Wärmeübertragungsvorrichtung (100) ferner aufweist:
eine erste Fläche (10), die eine Konfiguration hat, die zu dem Kühlkanal (210) konsistent ist, wobei die erste Fläche (10) gegen eine Innenfläche des Abschnitts des Kanals (210) anliegt, den Abschnitt teilweise überdeckend,
eine zweite Fläche (20), die zu der ersten Fläche (10) entgegengesetzt und zu einem inneren Abschnitt des Kühlkanals (210) (210) hin gewandt ist, wobei die zweite Fläche (20) eine unebene Fläche ist zum Erhöhen des Flächenkontakts mit dem Kühlmittel und auch eine Turbulenz in dem strömenden Kühlmittel erzeugt,
wobei auf das Passieren des Kühlmittels durch die Kanäle (210) die Wärme von der Spritzgießform (200) übertragen wird auf die erste Fläche (10) der Wärmeübertragungsvorrichtung (100) durch die innere Fläche der Kanäle (210) und dann auf das Kühlmittel durch die zweite Fläche (20), wobei, da die Kontaktfläche und die Turbulenz in der Strömung des Kühlmittels erhöht ist, auch die Wärmetransferrate dazwischen erhöht ist,
wobei der Querschnitt der ersten Fläche (10) konsistent ist mit dem Querschnitt des Kanals (210), **dadurch gekennzeichnet, dass** der Querschnitt der ersten Fläche (10) halbkreisförmig ist, wobei die unebene zweite Fläche (20) entlang der Breite der Wärmeübertragungsvorrichtung (100) Flexibilität bereitstellt, dadurch ein Positionieren der Wärmeübertragungsvorrichtung (100) in dem Kanal (210) erleichternd.

2. Spritzgießform (200) gemäß Anspruch 1, wobei die zweite Fläche (20) zick-zack-förmig ist.

3. Spritzgießform (200) gemäß Anspruch 1, wobei die zweite Fläche (20) eine Mehrzahl von Rippen hat.

4. Spritzgießform (200) gemäß irgendeinem vorhergehenden Anspruch, wobei die Wärmeübertragungsvorrichtung (100) aus einem wärmeleitfähigen Material gemacht ist.

5. Spritzgießform (200) gemäß irgendeinem vorhergehenden Anspruch, wobei der Abschnitt, in welchem die Wärmeübertragungsvorrichtung (100) angeordnet ist, ein Starkwärmeladungsbereich der Spritzgießform (200) ist.

## Revendications

1. Moule d'injection (200) comprenant une première moitié (220) et une deuxième moitié (230), la deuxième moitié (230) comprenant des canaux de refroidissement (210) configurés autour d'une cavité de moule (240) avec un fluide caloporteur étant mis en circulation à travers les canaux de refroidissement (210), le moule d'injection (200) comprenant en outre un dispositif de transfert de chaleur (100) pour augmenter la vitesse de refroidissement du moule d'injection (200),
dans lequel le dispositif de transfert de chaleur (100) est disposé à l'intérieur du canal de refroidissement (210) au niveau d'une partie prédéfinie, le dispositif de transfert de chaleur (100) recouvre partiellement la partie du canal de refroidissement (210) pour augmenter le taux de transfert de chaleur depuis la partie du canal de refroidissement (210) vers le fluide caloporteur circulant dans celui-ci de façon à augmenter la vitesse de refroidissement du moule d'injection (200), dans lequel le dispositif de transfert de chaleur (100) comprend en outre :
une première surface (10) ayant une configuration cohérente avec le canal de refroidissement (210), la première surface (10) repose contre une surface interne de la partie du canal (210) recouvrant partiellement la partie ;
une deuxième surface (20) orientée dans une direction opposée à la première surface (10) et vers la partie interne du canal de refroidissement (210), la deuxième surface (20) est une surface irrégulière pour augmenter le contact de surface avec le fluide caloporteur et crée en outre une turbulence dans le fluide caloporteur circulant,
dans lequel, lors du passage du fluide caloporteur à travers les canaux (210), la chaleur provenant du moule d'injection (200) est transférée vers la première surface (10) du dispositif de transfert de chaleur (100) à travers la surface interne des canaux (210), puis au fluide caloporteur à travers la deuxième surface (20), étant donné que la surface de contact et la turbulence dans l'écoulement du fluide caloporteur est augmentée, le taux de transfert de chaleur est également augmenté entre ceux-ci,
dans lequel la section transversale de la première surface (10) est cohérente avec la section transversale du canal (210), **caractérisé en ce que** la section transversale de la première surface (10) est semi-circulaire,
dans lequel la deuxième surface irrégulière (20) confère une flexibilité le long de la largeur du dispositif de transfert de chaleur (100) de façon à faciliter le positionnement du dispositif de transfert de chaleur (100) dans le canal (210).

2. Moule d'injection (200) selon la revendication 1, dans lequel la deuxième surface (20) est en zigzag.

3. Moule d'injection (200) selon la revendication 1, dans lequel la deuxième surface (20) comporte une pluralité d'ailettes.

4. Moule d'injection (200) selon l'une quelconque des revendications précédentes, dans lequel le dispositif de transfert de chaleur (100) est constitué d'un matériau thermoconducteur.

5. Moule d'injection (200) selon l'une quelconque des revendications précédentes, dans lequel la partie au niveau de laquelle le dispositif de transfert de chaleur (100) est placé est une zone à charge thermique élevée du moule d'injection (200).
